# EUROPÄISCHE PATENTSCHRIFT

(11) **EP 4 286 817 B1**
(45) Veröffentlichungstag und Bekanntmachung des Hinweises auf die Patenterteilung: **23.07.2025**
(21) Anmeldenummer: 23176759.1
(22) Anmeldetag: 01.06.2023
(51) Int. Cl.: G01M 3/02, G01M 3/28

(54) **SYSTEM MIT PRÜFANSCHLUSS ZUM PRÜFEN VON FLUIDFÜHRENDEN BAUTEILEN**
SYSTEM WITH TEST CONNECTION FOR TESTING FLUID-CONDUCTING COMPONENTS
SYSTÈME AVEC RACCORD DE CONTRÔLE POUR CONTRÔLER DES COMPOSANTS CONDUISANT DES FLUIDES

(30) Priorität: 02.06.2022 DE 102022113916
(43) Veröffentlichungstag der Anmeldung: 06.12.2023
(73) Patentinhaber: Rud. Prey GmbH, 24113 Kiel (DE)
(72) Erfinder: Prey, Thomas, 24105 Kiel (DE)
(74) Vertreter: Hauck Patent- und Rechtsanwälte PartmbB

(56) Entgegenhaltungen:
- CN-A- 111 578 014
- CN-A- 113 483 954
- DE-A1- 102013 010 093
- DE-T2- 69 706 725
- KR-A- 20100 126 117
- US-A1- 2015 300 510

## Beschreibung

Die Erfindung betrifft ein System mit einem Prüfanschluss zum Prüfen von fluidführenden Bauteilen, insbesondere fluidführenden Armaturen und/oder fluidführenden Schläuchen, wobei ein zu prüfendes Bauteil mit einer Öffnung an den Prüfanschluss anschließbar ist, wobei mittels einer Unterdruckeinrichtung ein vorgegebener Unterdruck in dem Bauteil erzeugbar ist, und wobei mittels einer Druckeinrichtung ein vorgegebener Prüfdruck in dem Bauteil erzeugbar ist.

Beispielsweise Feuerwehren benötigen zur Wasserbeförderung von einer Wasserentnahmestelle zu einem Brandherd diverse fluidführende Bauteile, insbesondere wasserführende Armaturen und wasserführende Schläuche. Je nach Einsatzzweck sind Feuerwehrfahrzeuge speziell hierfür ausgestattet und mit unterschiedlichen Bauteilen bestückt. Wasserführende Bauteile unterliegen einer regelmäßigen Prüfpflicht. Da Feuerwehren häufig logistisch nicht umfangreich ausgestattet sind, insbesondere keine eigene Prüfhalle besitzen, ist es häufig erforderlich, die zu prüfenden Bauteile in entsprechende Prüfwerkstätten zu geben, wo sie geprüft werden können.

Wasserführende Armaturen und wasserführende Bauteile müssen zum Beispiel im Rahmen einer Saugprüfung und einer Druckprüfung geprüft werden. Bei einer Saugprüfung wird in dem Bauteil ein vorgegebener Unterdruck mittels einer Unterdruckeinrichtung erzeugt, so dass das Bauteil auf Dichtheit und ordnungsgemäße innere Beschaffenheit geprüft werden kann. Bei einer Druckprüfung wird in dem Bauteil ein vorgegebener Prüfdruck erzeugt und wiederum die Dichtheit und ordnungsgemäße mechanische Beschaffenheit überprüft. Zum Durchführen solcher Saug- und Druckprüfungen sind Prüfanschlüsse bekannt, an die die fluidführenden Bauteile mit einer ihrer flüssigkeitsführenden Öffnungen angeschlossen werden. Beispielsweise für eine Saugprüfung muss der Prüfanschluss die angeschlossene Öffnung des Bauteils gegen Eintritt von Luft verschließen, so dass über eine an einem anderen Ende des Bauteils angeschlossene Vakuumpumpe ein Unterdruck in dem Bauteil erzeugt werden kann. Soll nachfolgend eine Druckprüfung des Bauteils erfolgen, muss dieses in der Regel von dem Prüfanschluss abgekoppelt und an einen anderen Prüfanschluss angeschlossen werden, der die angeschlossene Öffnung des Bauteils gegen Austritt einer Prüfflüssigkeit, wie Wasser, verschließt, so dass über eine an einer anderen Öffnung des Bauteils angeschlossene Druckpumpe die Prüfflüssigkeit für die Druckprüfung unter hohem Druck in das Bauteil eingeleitet werden kann. Mit dieser Vorgehensweise ist ein erheblicher Aufwand verbunden, insbesondere da regelmäßig sowohl eine Saugprüfung als auch eine Druckprüfung am Bauteil durchgeführt werden müssen. Ein weiteres Problem stellt das erforderliche Entlüften des Bauteils vor dem Einleiten der Prüfflüssigkeit für die Druckprüfung dar. Dieses Entlüften muss regelmäßig händisch erfolgen, wodurch weiterer Aufwand entsteht.

Aus CN 111578014 A ist ein für den Einsatz in Öltransportleitungen ausgebildetes druckbegrenzendes Ventil bekannt. Das Ventil ist als automatisch öffnendes und schließendes bidirektionales Ventil ausgebildet, das eingesetzt wird, um das Risiko von Leckagen in Öltransportleitungen zu verringern. Das Ventil schließt den Öldurchgang selbständig, wenn stromaufwärts oder stromabwärts des Ventils ein eingestellter Druck überschritten wird.

US 20150300510 A1 beschreibt ein Hydraulikventil zur Vermeidung von Leckage in einem Antrieb zur Betätigung eines Hoch- oder Mittelspannungsleistungsschalters. Das Hydraulikventil zur Verbindung einer ersten fluidführenden Druckleitung mit einer zweiten fluidführenden Druckleitung in einem Antrieb zur Betätigung eines Hoch- oder Mittelspannungsleistungsschalters umfasst ein Gehäuse mit einem ersten Kanaleingang zur Anbindung an die erste Druckleitung und mit einem zweiten Kanaleingang zur Anbindung an die zweite Druckleitung sowie mit einem zwischen dem ersten und dem zweiten Kanaleingang befindlichen Hohlraum. Das Hydraulikventil umfasst des Weiteren einen in dem Hohlraum beweglichen Verschlusskörper, dessen Umfang zumindest an einer Stelle größer ist als der jeweilige Umfang der an den Hohlraum angrenzenden Öffnung des ersten und des zweiten Kanaleingangs, wobei der Verschlusskörper geometrisch so an den Querschnitt dieser Öffnungen angepasst ist, dass er sie beim jeweiligen Aufsitzen vollständig verschließt. Außerdem gehören zum Hydraulikventil ein in der ersten Kanalöffnung befestigtes erstes Federelement, das an einer ersten Seite des Verschlusskörpers mit diesem verbunden ist und im entspannten Zustand in den Hohlraum hineinragt, sowie ein in der zweiten Kanalöffnung befestigtes zweites Federelement, das an einer zweiten Seite des Verschlusskörpers mit diesem verbunden ist und im entspannten Zustand in den Hohlraum hineinragt.

Aus CN 113483954 A ist eine Wassertauchvorrichtung für Kraftfahrzeugauspuffrohre bekannt, mit der die Luftdichtheit von Auspuffrohren geprüft wird. Die Vorrichtung umfasst eine Wassertauchkammer zum Eintauchen eines Auspuffrohrs und einen ersten und einen zweiten Stopfenblock für den Anschluss von zwei Enden des Auspuffrohrs. Das Auspuffrohr wird mit Druck beaufschlagt und eine Luftleckage kann anhand einer Blasenbildung im Tauchbad beobachtet werden.

DE 102013010093 A1 beschreibt eine Vorrichtung zum Prüfen von Rohrleitungen oder Schläuchen, insbesondere Löschschläuchen, auf Dichtheit, umfassend eine Druckpumpe, die über eine erste Saugleitung mit einem Flüssigkeitsreservoir verbunden ist, und von der eine Druckleitung zu mindestens einer zu prüfenden Rohrleitung und/oder mindestens einem zu prüfenden Schlauch führt, wobei in der Druckleitung ein Injektor angeordnet ist, der über eine zweite Saugleitung mit dem Flüssigkeitsreservoir verbunden ist, und der bis zu einem in der Druckleitung herrschenden Grenzdruck selbsttätig Flüssigkeit über die zweite Saugleitung aus dem Flüssigkeitsreservoir ansaugt und in die Druckleitung einspeist.

DE 69706725 T2 beschreibt einen Wärmetauscher, insbesondere einen Dampfgenerator für Druckwasser-Kernreaktoren, bei dem eine Leckage des Rohrsystems des Wärmetauschers im Betrieb erkannt werden kann. Die Rohre des Wärmetauschers enden in einer Platte oberhalb eines Wasserkastens, der durch eine Innenwand in zwei Kammern unterteilt ist. In jeder Kammer befinden sich zwei identische Prüfgeräte, die auf ferngesteuerten Bedienungsarmen gelagert sind. Mit Hilfe einer Videokamera wird ein erster Wasserinjektionskopf in das entsprechende Rohrende eingeführt und dort durch ein flexibles Element befestigt, das hydraulisch verformt wird. Wasser wird eingeleitet und ein Luftspülkolben bewegt sich zum anderen Ende des Rohrs, wo er durch einen zweiten Einspritzkopf knapp außerhalb gestoppt wird. Der zweite Einspritzkopf wird dann eingeführt und gesichert, und durch aufeinanderfolgende Wasserzugaben und Druckmessungen kann ein eventuelles Leck gefunden werden.

Aus KR 20100126117 A ist ein System zum Aufspüren Defektstellen in Rohrleitungen bekannt, das ein selbstfahrendes Fahrzeug und eine Fernsteuerungsvorrichtung umfasst. Das selbstfahrende Fahrzeug fährt in eine kreisförmige Rohrleitung ein und inspiziert das Innere der kreisförmigen Rohrleitung. Die Fernsteuerungseinrichtung bietet eine Benutzerschnittstelle. Die von einem Sensor gemessenen Messdaten und die von einer Kamera gemessenen Bilddaten werden in den Anzeigebereichen der Benutzerschnittstelle angezeigt.

Ausgehend von dem erläuterten Stand der Technik liegt der Erfindung die Aufgabe zugrunde, einen Prüfanschluss der eingangs genannten Art bereitzustellen, mit dem eine Saug- und Druckprüfung eines fluidführenden Bauteils in einfacher Weise zuverlässig möglich ist.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für einen Prüfanschluss der eingangs genannten Art löst die Erfindung die Aufgabe dadurch, dass der Prüfanschluss ein zwischen einer ersten Schaltstellung und einer zweiten Schaltstellung schaltbares Prüfventil aufweist, so dass der Unterdruck mittels der Unterdruckeinrichtung und der Prüfdruck mittels der Druckeinrichtung im an den Prüfanschluss angeschlossenen Zustand des Bauteils nacheinander in dem Bauteil erzeugbar sind.

Bei den an dem Prüfanschluss zu prüfenden fluidführenden Bauteilen kann es sich insbesondere um fluidführende Armaturen und/oder fluidführende Schläuche handeln. Die Bauteile können flüssigkeitsführend sein, vorzugsweise wasserführend. Es kann sich um Bauteile aus der Brandbekämpfung handeln, die von Feuerwehren genutzt werden. Als Bauteile beispielhaft genannt seien Saugschläuche, Standrohre, Strahlrohre, Druckbegrenzungsventile, Verteiler, Hebekissen sowie weitere wasserführende Armaturen und Systemtrenner.

Der Prüfanschluss weist einen Anschlussabschnitt auf zum Anschließen eines zu prüfenden Bauteils mit einer im Betrieb fluidführenden Öffnung. Der Anschlussabschnitt kann grundsätzlich in beliebiger Weise ausgestaltet sein, je nachdem welche Anschlussmöglichkeiten die zu prüfenden Bauteile besitzen. Zum Beispiel in Deutschland kommen als Anschlüsse der Bauteile und somit auch als Anschlussabschnitt des Prüfanschlusses häufig sogenannte Storz-Kupplungen zum Einsatz. Sie werden in der Brandbekämpfung insbesondere bei Feuerwehren oder Wasserhydranten eingesetzt. Es handelt sich um nicht absperrende, symmetrische hermaphrodite Kupplungen mit Bajonettverschluss.

Für die an dem Prüfanschluss durchzuführende Druckprüfung wird eine Druckeinrichtung zum Erzeugen eines vorgegebenen Prüfdrucks in dem zu prüfenden Bauteil eingesetzt. Für die Saugprüfung wird entsprechend eine Unterdruckeinrichtung zum Erzeugen eines vorgegebenen Unterdrucks in dem zu prüfenden Bauteil eingesetzt. Die Druckeinrichtung umfasst eine Pumpe, vorzugsweise eine Hydraulikpumpe, mit der ein Prüffluid, insbesondere eine Prüfflüssigkeit, wie Prüfwasser, in das Bauteil gepumpt werden kann. Hierzu kann die Druckeinrichtung insbesondere an einer zweiten Öffnung des Bauteils angeschlossen werden. Durch Einpumpen des Prüffluids wird in dem Bauteil der vorgegebene Prüfdruck erzeugt und das Bauteil so in der vorgeschriebenen Weise auf Druckbeständigkeit und Dichtigkeit geprüft. Ein Prüfdruck ist zum Beispiel denkbar in einer Höhe von 5 bar oder mehr als 5 bar, beispielsweise mehr als 10 bar, insbesondere mehr als 20 bar.

Die Unterdruckeinrichtung umfasst ebenfalls eine Pumpe, vorzugsweise eine Hydraulikpumpe, insbesondere eine Vakuumpumpe, mit der in dem zu prüfenden Bauteil ein vorgegebener Unterdruck, also ein geringerer Druck als Umgebungsdruck, erzeugt werden kann. Wiederum kann die Pumpe der Unterdruckeinrichtung an einer zweiten Öffnung des Bauteils angeschlossen werden. Durch Abpumpen der in dem Bauteil enthaltenen Luft wird in dem Bauteil ein vorgegebener Unterdruck erzeugt und so eine Saugprüfung zum Beispiel eines Saugschlauchs durchgeführt. Sobald in dem Bauteil der vorgegebene Unterdruck erreicht ist, kann zum Beispiel eine Sichtprüfung der inneren Beschaffenheit des Bauteils, zum Beispiel eines Saugschlauchs, durchgeführt werden.

Wie eingangs erläutert, muss für die Saugprüfung die an den Prüfanschluss angeschlossene Öffnung des Bauteils gegen einen Eintritt von Luft aus der Umgebung verschlossen sein, so dass in dem Bauteil der vorgegebene Unterdruck erzeugt werden kann. Wie ebenfalls eingangs erläutert, muss für die Druckprüfung die an den Prüfanschluss angeschlossene Öffnung des Bauteils gegen einen Austritt des in das Bauteil eingeleiteten Prüffluids, insbesondere der Prüfflüssigkeit, wie Wasser, abgedichtet sein, so dass in dem Bauteil der vorgegebene Prüfdruck erzeugt werden kann. Der erfindungsgemäße Prüfanschluss weist ein zwischen einer ersten Schaltstellung und einer zweiten Schaltstellung schaltbares Prüfventil auf. Dieses schaltbare Prüfventil ermöglicht es, nacheinander und ohne Umkuppeln des Bauteils eine Saugprüfung durch Erzeugen eines Unterdrucks in dem Bauteil und eine Druckprüfung durch Erzeugen eines Prüfdrucks in dem Bauteil durchzuführen. Das Bauteil kann während dieser unterschiedlichen Prüfarten an dem Prüfanschluss angeschlossen bleiben. Durch das zwischen der ersten Schaltstellung und der zweiten Schaltstellung schaltbare Prüfventil können je nach Schaltstellung die Saugprüfung oder die Druckprüfung durchgeführt werden. Beispielsweise könnte in der ersten Schaltstellung das Erzeugen des Unterdrucks mittels der Unterdruckeinrichtung in dem Bauteil erfolgen und in der zweiten Schaltstellung das Erzeugen des Prüfdrucks in dem Bauteil durch die Druckeinrichtung.

Indem das Bauteil zwischen diesen beiden Prüfvorgängen nicht vom Prüfanschluss gelöst werden muss, insbesondere also kein manueller Eingriff am Prüfanschluss erforderlich ist, wird das regelmäßig vorgeschriebene Durchführen einer Saugprüfung und einer Druckprüfung erheblich vereinfacht.

Das Prüfventil kann in der ersten Schaltstellung den Prüfanschluss gegen einen Eintritt von Luft in das an den Prüfanschluss angeschlossene Bauteil während des Erzeugens des Unterdrucks in dem Bauteil verschließen. Weiterhin kann das Prüfventil in der zweiten Schaltstellung den Prüfanschluss gegen einen Austritt eines Prüffluids aus dem an den Prüfanschluss angeschlossenen Bauteil während des Erzeugens des Prüfdrucks in dem Bauteil verschließen. Wie erläutert, wird bei der Saugprüfung in dem Bauteil ein Unterdruck erzeugt, indem in dem Bauteil vorhandene Luft mittels einer Pumpe abgepumpt wird. Dabei muss verhindert werden, dass durch den Prüfanschluss Luft in das Bauteil gezogen wird. Das Prüfventil des erfindungsgemäßen Prüfanschlusses gewährleistet dies durch Verschließen des Prüfanschlusses, und damit der angeschlossenen Öffnung des Bauteils gegen einen Eintritt von Luft in das Bauteil während des Erzeugens des Unterdrucks. Bei einer Druckprüfung wird dagegen in dem Bauteil ein Prüfdruck erzeugt, in der Regel durch Einleiten eines Prüffluids, wie einer Prüfflüssigkeit, insbesondere Wasser, unter hohem Druck bis in dem Bauteil der vorgegebene Prüfdruck erreicht ist. Dabei muss entsprechend verhindert werden, dass durch den Prüfanschluss und damit durch die angeschlossene Öffnung des Bauteils Prüffluid aus dem Bauteil austreten kann. Dies wird durch das Prüfventil gewährleistet, indem es in der zweiten Schaltstellung den Prüfanschluss gegen einen Austritt eines Prüffluids aus dem Bauteil verschließt. Ein Austritt von Luft, insbesondere zu Beginn der Druckprüfung, kann dabei möglich sein, wie nachfolgend noch näher erläutert.

Gemäß einer Ausgestaltung kann das Prüfventil mittels einer Steuereinrichtung elektrisch oder hydraulisch oder pneumatisch gesteuert zwischen der ersten Schaltstellung und der zweiten Schaltstellung schaltbar sein. Der Prüfanschluss kann auch die Steuereinrichtung umfassen. Das durch die Steuereinrichtung gesteuerte Prüfventil kann zum Beispiel ein Doppelsitzventil sein oder es kann zwei Ventile umfassen, die wahlweise angesteuert werden können, so dass zum Beispiel eines der Ventile für eine Saugprüfung gegen einen Eintritt von Luft schließt und ein zweites der Ventile für eine Druckprüfung gegen einen Austritt eines Prüffluids. Die Ansteuerung des Prüfventils kann auch Rückschlagventile für die Steuerung umfassen.

Gemäß einer weiteren Ausgestaltung kann das Prüfventil mechanisch durch Erzeugen des Unterdrucks und des Prüfdrucks zwischen der ersten Schaltstellung der zweiten Schaltstellung schaltbar sein. Vorteilhaft an dieser Ausgestaltung ist, dass keine separate Steuerung oder Steuereinrichtung und auch keine entsprechenden Steuerkomponenten, wie zum Beispiel elektrische oder hydraulische oder pneumatische Leitungen oder Steuerleitungen, erforderlich sind. Vielmehr wird das Prüfventil im Zuge des Anlegens des Unterdrucks bzw. im Zuge des Anlegens des Prüfdrucks automatisch in die jeweils erforderliche Schaltstellung verstellt. Es ergibt sich eine besonders einfache und robuste Konstruktion sowie Bedienbarkeit.

Gemäß einer weiteren Ausgestaltung kann vorgesehen sein, dass das Prüfventil ein mit dem Prüfanschluss verbundenes Ventilgehäuse mit einem ersten Ventilsitz und einem zweiten Ventilsitz sowie ein in einer Axialrichtung in dem Ventilgehäuse bewegliches Ventilelement aufweist, wobei das Ventilelement in der ersten Schaltstellung des Prüfventils mit einem ersten Dichtabschnitt an dem ersten Ventilsitz anliegt, so dass der erste Dichtabschnitt das Ventilgehäuse gegen einen Eintritt von Luft abdichtet, und dass das Ventilelement in der zweiten Schaltstellung des Prüfventils mit einem zweiten Dichtabschnitt an dem zweiten Ventilsitz anliegt, so dass der zweite Dichtabschnitt das Ventilgehäuse gegen einen Austritt eines Prüffluids abdichtet. Das Abdichten des Ventilgehäuses bewirkt auch das Abdichten des Prüfanschlusses und damit der angeschlossenen Öffnung des Bauteils.

Das Ventilelement kann in besonders bevorzugter Weise durch Erzeugen des Unterdrucks und des Prüfdrucks axial zwischen der ersten Schaltstellung und der zweiten Schaltstellung bewegt werden. Das Ventilelement wird also beispielsweise bei Anlegen des Unterdrucks durch den erzeugten Unterdruck in die erste Schaltstellung gezogen, in der es mit seinem Dichtelement an dem ersten Ventilsitz anliegt und ein weiteres Einsaugen von Luft aus der Umgebung sicher verhindert. Wird nach Abschluss der Saugprüfung nunmehr durch Einleiten eines Prüffluids in das Bauteil ein Prüfdruck in dem Bauteil aufgebaut, wird das Ventilelement nunmehr durch das eingeleitete Prüffluid axial in die zweite Schaltstellung gedrückt, in der es mit seinem zweiten Dichtelement an dem zweiten Ventilsitz anliegt und ein weiteres Austreten von Prüffluid aus dem Bauteil verhindert. Diese Ausgestaltung realisiert das automatische Schalten des Prüfventils zwischen der ersten und zweiten Schaltstellung ohne erforderlichen manuellen Eingriff in besonders einfacher und zuverlässiger Weise.

Das Ventilelement kann eine in Axialrichtung beweglich gelagerte Ventilstange aufweisen, an der der erste und zweite Dichtabschnitt angeordnet sind. Der erste und zweite Dichtabschnitt umfassen eine erste bzw. zweite Dichtung. Gemäß einer besonders praxisgemäßen Ausgestaltung können der erste und zweite Dichtabschnitt durch einen ersten und zweiten Dichtring, vorzugsweise einen ersten und zweiten Gummiring, oder eine erste und zweite Dichtplatte, vorzugsweise eine erste und zweite Gummiplatte, gebildet sein.

Gemäß einer weiteren Ausgestaltung kann das Ventilelement durch ein Vorspannelement, vorzugweise eine Vorspannfeder, in eine zwischen der ersten und zweiten Schaltstellung befindliche dritte Stellung vorgespannt sein, in der ein Durchtritt von Luft oder Prüffluid durch das Ventilgehäuse möglich ist. Das Vorspannelement bzw. die Vorspannfeder kann sich dabei einerseits an dem Ventilelement, zum Beispiel einem Flanschabschnitt der Ventilstange, und andererseits an einer gegenüberliegenden Fläche des Ventilgehäuses abstützen, insbesondere auf Seiten des zweiten Ventilsitzes. Durch diese Ausgestaltung wird verhindert, dass das Prüfventil bereits ohne Anliegen einer äußeren Kraft den Durchgang durch den Prüfanschluss sperrt.

Gemäß einer weiteren diesbezüglichen Ausgestaltung kann vorgesehen sein, dass die Vorspannung derart ausgebildet ist, dass das Ventilelement während eines Entlüftens eines an den Prüfanschluss angeschlossenen Bauteils durch Erzeugen eines Entlüftungsdrucks in dem Bauteil, der geringer als der Prüfdruck ist, durch die Vorspannung in der dritten Stellung gehalten wird und durch Erzeugen des höheren Prüfdrucks gegen die Vorspannung des Vorspannelements in die zweite Schaltstellung bewegt wird. Zu Beginn einer Druckprüfung, also zu Beginn des Einleitens eines Prüffluids zum Aufbauen des vorgegebenen Prüfdrucks befindet sich in dem Inneren des Bauteils regelmäßig Luft, die für die Druckprüfung durch das Prüffluid, beispielsweise die Prüfflüssigkeit, wie Wasser, verdrängt werden muss. Würde das Prüfventil in einer Ruhestellung vor Beginn der Druckprüfung den Prüfanschluss bereits gegen einen Durchtritt von Luft sperren, wäre diese erforderliche Entlüftung über den Prüfanschluss nicht möglich. Wie erläutert, wird durch die durch das Vorspannelement realisierte dritte Stellung des Prüfventils zwischen der ersten und zweiten Schaltstellung ein Durchtritt von Luft, insbesondere für ein Entlüften des Bauteils zu Beginn einer Druckprüfung, ermöglicht. Die durch das Vorspannelement bereitgestellte Vorspannung ist ausreichend groß, dass bei den während des Entlüftens im Vergleich zu dem Prüfdruck regelmäßig niedrigeren anliegenden Drücken das Ventilelement in der dritten Stellung gehalten wird. Steigt der Druck in dem Bauteil, und damit der Druck auf das Ventilelement im Rahmen des Einleitens des Prüffluids weiter an, wird die Vorspannkraft des Vorspannelements überschritten, so dass nun das Ventilelement aus der dritten Stellung beispielsweise in die zweite Schaltstellung gedrückt wird, in der es mit dem zweiten Dichtelement an dem zweiten Ventilsitz anliegt und somit für die weitere Druckprüfung das Austreten des Prüffluids über den Prüfanschluss sicher verhindert. Durch die vorgenannte Ausgestaltung ist somit ohne erforderlichen manuellen Eingriff eine automatische Entlüftung im Zuge des Aufbauens des Prüfdrucks in dem Bauteil möglich.

Der Prüfanschluss kann weiterhin ein Sichtfenster für eine Sichtprüfung des Inneren eines an den Prüfanschluss angeschlossenen Bauteils aufweisen. Das Sichtfenster kann zum Beispiel aus Glas oder einem Kunststoff, wie Acrylglas, bestehen. Es kann zum Beispiel in den Anschlussabschnitt des Prüfanschlusses integriert sein und beispielsweise ein Ventilgehäuse des Prüfanschlusses umgeben. Das Sichtfenster weist eine ausreichende mechanische Beschaffenheit auf, um dem in dem Bauteil erzeugten Prüfdruck oder Unterdruck jederzeit standzuhalten. Durch das Sichtfenster kann die innere Beschaffenheit des Bauteils, zum Beispiel eines Saugschlauchs, zum Beispiel während einer Unterdruckprüfung kontrolliert werden.

Gemäß einer weiteren Ausgestaltung kann der Prüfanschluss weiterhin eine das Innere eines an den Prüfanschluss angeschlossenen Bauteils aufnehmende Kamera aufweisen. Die Kamera kann zum Beispiel in den Anschlussabschnitt des Prüfanschlusses integriert sein. Das Kamerabild des Inneren des Bauteils kann auf einer Anzeigeeinheit, zum Beispiel eines Smartphones, eines Tablets, eines Laptops, eines PCs oder einer Bedienerschnittstelle einer Prüfanlage übertragen werden. Auf diese Weise kann die Beschaffenheit des Bauteilinnenraums in einfacher Weise auch an einem von dem Bauteil getrennten Ort überwacht werden. Außerdem erlaubt diese Lösung eine umfangreiche Dokumentation der Sichtprüfung.

Nach einer weiteren Ausgestaltung kann der Prüfanschluss weiterhin eine das Innere eines an den Prüfanschluss angeschlossen Bauteils beleuchtende Lichtquelle aufweisen. Eine solche Lichtquelle, die ebenfalls zum Beispiel in einen Anschlussabschnitt des Prüfanschlusses integriert sein kann, erleichtert die Inspektion der Beschaffenheit des Bauteilinnenraums.

Die Erfindung betrifft auch ein System umfassend einen erfindungsgemäßen Prüfanschluss sowie eine Unterdruckeinrichtung zum Erzeugen eines vorgegebenen Unterdrucks in einem zu prüfenden Bauteil und eine Druckeinrichtung zum Erzeugen eines vorgegebenen Prüfdrucks in dem zu prüfenden Bauteil. Das System kann auch das zu prüfende Bauteil umfassen, wobei es sich bei dem Bauteil um eines der oben genannten Bauteile, zum Beispiel einen Saugschlauch, handeln kann.

Die Erfindung löst die Aufgabe außerdem durch die Verwendung eines erfindungsgemäßen Systems zur kombinierten Saug- und Druckprüfung eines an den Prüfanschluss angeschlossenen zu prüfenden Bauteils, insbesondere eines Saugschlauchs, wobei im an den Prüfanschluss angeschlossenen Zustand des Bauteils in dem Bauteil nacheinander für eine Saugprüfung ein Unterdruck mittels der Unterdruckeinrichtung und für eine Druckprüfung ein Prüfdruck mittels der Druckeinrichtung erzeugt werden, insbesondere ohne dass das Bauteil zwischendurch von dem Prüfanschluss gelöst werden muss, und insbesondere ohne einen erforderlichen manuellen Eingriff. Zum Steuern der Druckprüfung und Saugprüfung kann das System eine Steuereinrichtung umfassen, so dass nach Anschließen des zu prüfenden Bauteils an den Prüfanschluss die kombinierte Saug- und Druckprüfung an dem Prüfanschluss automatisch ohne weiteren manuellen Eingriff erfolgen kann, insbesondere durch Ansteuern entsprechender Pumpen und diesen zugeordneten Ventilen.

Ein Ausführungsbeispiel der Erfindung wird nachfolgend anhand von Figuren näher erläutert. Es zeigen schematisch:
- Figur 1: einen erfindungsgemäßen Prüfanschluss mit darin angeschlossenem zu prüfendem Bauteil in einer teilgeschnittenen Ansicht gemäß einem ersten Ausführungsbeispiel,
- Figur 2: ein vergrößertes Detail des in Figur 1 gezeigten Prüfanschlusses, und
- Figur 3: einen erfindungsgemäßen Prüfanschluss mit darin angeschlossenem zu prüfendem Bauteil nach einem zweiten Ausführungsbeispiel.

Soweit nichts anderes angegeben ist, bezeichnen in den Figuren gleiche Bezugszeichen gleiche Gegenstände.

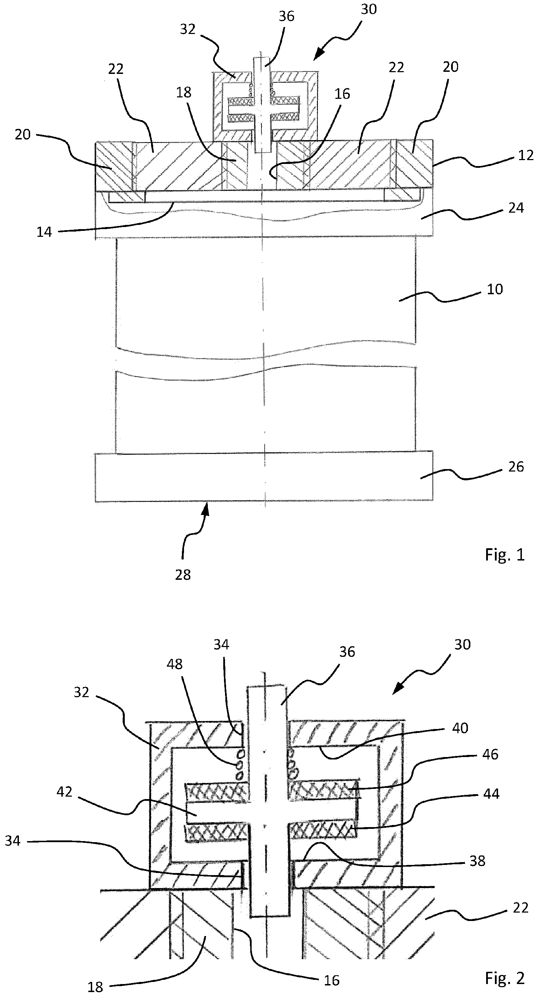

In Figur 1 ist ein zu prüfendes fluidführendes Bauteil 10, vorliegend ein Saugschlauch 10, an einen Anschlussabschnitt 12 eines erfindungsgemäßen Prüfanschlusses angeschlossen. Der Anschlussabschnitt 12 kann zum Beispiel eine Storz-Kupplung umfassen, an die der Saugschlauch 10 mit einer ersten Öffnung 14 angekuppelt wird. Der Anschlussabschnitt 12 umfasst eine zentrale Bohrung 16, die von einem zentralen zylindrischen Abschnitt 18 gebildet ist. Zwischen dem zylindrischen Abschnitt 18 und einem äußeren zylindrischen Ringabschnitt 20 ist ein ringförmiges Sichtfenster 22 zum Beispiel aus Acrylglas gehalten. Über dieses Sichtfenster 22 kann beispielsweise während einer Saugprüfung das Innere des Saugschlauchs 10 geprüft werden. Die an den Prüfanschluss angeschlossene erste Öffnung 14 ist in einem ersten Kupplungsabschnitt 24 des Saugschlauchs 10 ausgebildet, der entsprechend eine Storz-Kupplung bilden kann. An seinem gegenüberliegenden Ende weist der Saugschlauch 10 einen zweiten Kupplungsabschnitt 26 auf, der eine zweite Öffnung 28 bildet. Zum Durchführen einer Saugprüfung wird mittels einer an den zweiten Kupplungsabschnitt 26 angeschlossenen Pumpe, insbesondere einer Vakuumpumpe, in dem Saugschlauch 10 befindliche Luft abgesaugt, um in dem Saugschlauch 10 einen vorgegebenen Unterdruck zu erzeugen. Für eine Druckprüfung des Saugschlauchs 10 wird entsprechend über eine an dem zweiten Kupplungsabschnitt 26 angeschlossene Pumpe ein Prüffluid, zum Beispiel eine Prüfflüssigkeit, wie Wasser, in das Innere des Saugschlauchs 10 gepumpt, bis in dem Saugschlauch 10 ein vorgegebener Prüfdruck erreicht ist. Die Pumpen können über entsprechende Ventile wahlweise mit dem Kupplungsabschnitt 26 und der zweiten Öffnung 28 verbunden werden. Das wahlweise Verbinden kann durch eine Steuereinrichtung gesteuert erfolgen.

Um zu verhindern, dass während der Saugprüfung über die zentrale Bohrung 16 Luft aus der Umgebung in den Saugschlauch 10 eingesaugt wird, und um zu verhindern, dass während der Druckprüfung über die zentrale Bohrung 16 Prüffluid aus dem Inneren des Saugschlauchs 10 in die Umgebung austreten kann, weist der Prüfanschluss ein Prüfventil 30 auf. Das Prüfventil 30 ist in Figur 2 vergrößert dargestellt. Das Prüfventil 30 umfasst ein Ventilgehäuse 32 mit einer mit der zentralen Bohrung 16 fluchtenden Durchgangsöffnung 34, in der eine Ventilstange 36 axial beweglich gelagert ist. Das Ventilgehäuse 32 kann einstückig mit dem zylindrischen Abschnitt 18 ausgebildet sein oder ein getrenntes Bauteil bilden, das mit dem zylindrischen Abschnitt 18 in geeigneter Weise verbunden ist. Eine untere Innenfläche 38 des Ventilgehäuses 32 bildet einen ersten Ventilsitz und eine gegenüberliegende Innenfläche 40 des Ventilgehäuses 32 bildet einen zweiten Ventilsitz. Die Ventilstange 36 weist einen Flansch 42 auf, an dessen in Figur 2 unteren Seite ein erster Dichtabschnitt 44 und an dessen in Figur 2 oberen Seite ein zweiter Dichtabschnitt 46 angeordnet ist. Die Dichtabschnitte 44, 46 sind als Dichtringe 44, 46 ausgebildet und können zum Beispiel Gummiringe 44, 46 sein. Durch eine sehr schematisch dargestellte Vorspannfeder 48 ist die Ventilstange 36 und mit ihr die Dichtabschnitte 44, 46 in die in den Figuren 1 und 2 gezeigte dritte Stellung vorgespannt. Aus dieser dritten Stellung kann die Ventilstange 36 in Figur 2 axial nach unten bewegt werden, bis der erste Dichtring 44 dichtend an dem ersten Ventilsitz 38 anliegt und so die Durchgangsöffnung 34 und damit den Prüfanschluss gegen ein Eintreten von Luft aus der Umgebung in das Innere des Saugschlauchs 10 verschließt. Weiterhin kann die Ventilstange 36 aus der in Figur 2 gezeigten dritten Stellung in Figur 2 gegen die Vorspannung der Vorspannfeder 48 axial nach oben bewegt werden bis der zweite Dichtring 46 dichtend an dem zweiten Ventilsitz 40 anliegt und die Durchgangsöffnung 34 und damit der Prüfanschluss gegen ein Austreten von Prüffluid aus dem Inneren des Saugschlauchs 10 in die Umgebung dicht abgeschlossen ist.

Grundsätzlich wird darauf hingewiesen, dass sich mit Bezug auf die Zeichnungen genannte Richtungen, wie oben, unten, links, rechts, ausschließlich auf die Darstellung in den Zeichnungen beziehen. Es versteht sich, dass die Anordnung des Prüfanschlusses sowie des Saugschlauchs 10 und der weiteren Komponenten selbstverständlich auch anders orientiert sein könnte als in den Figuren dargestellt.

Nachfolgend wird die Funktion des in den Figuren 1 und 2 gezeigten Prüfanschlusses erläutert. Ausgangsstellung der Ventilstange 36 ist die in den Figuren 1 und 2 gezeigte dritte Stellung, in der Luft oder ein Prüffluid durch die Durchgangsöffnung 34 gelangen kann, beispielsweise aus der Umgebung in das Innere des Saugschlauchs 10 oder aus dem Inneren des Saugschlauchs 10 in die Umgebung. Soll beispielsweise in einem ersten Schritt eine Saugprüfung des Saugschlauchs 10 erfolgen, wird durch eine an den zweiten Kupplungsabschnitt 26 angeschlossene Pumpe, insbesondere Vakuumpumpe, in dem Saugschlauch 10 befindliche Luft über die zweite Öffnung 28 abgepumpt. Durch den dadurch erzeugten Unterdruck wird die Ventilstange 36 aus der in den Figuren 1 und 2 gezeigten dritten Stellung in Figur 2 axial nach unten in die erste Schaltstellung gezogen, in der der Dichtring 44 dicht an dem ersten Ventilsitz 38 anliegt, so dass keine weitere Luft aus der Umgebung durch die Durchgangsöffnung 34 in das Innere des Bauteils 10 gelangen kann. In dem Bauteil 10 kann nun für die Saugprüfung der vorgegebene Unterdruck erzeugt werden. Währenddessen kann beispielsweise über das Sichtfenster 22 die innere Beschaffenheit des Saugschlauchs 10 geprüft werden.

Soll beispielsweise in einem zweiten Prüfschritt eine Druckprüfung des Saugschlauchs 10 erfolgen, wird über eine an dem zweiten Kupplungsabschnitt 26 angeschlossene Pumpe ein Prüffluid, wie eine Prüfflüssigkeit, insbesondere Wasser, in das Innere des Saugschlauchs 10 gepumpt. Dazu kann zum Beispiel durch eine Steuereinrichtung automatisch gesteuert die Vakuumpumpe durch Schließen eines entsprechenden Ventils von dem zweiten Kupplungsabschnitt 26 getrennt und die Pumpe für die Druckprüfung durch Öffnen eines entsprechenden Ventils mit dem zweiten Kupplungsabschnitt 26 verbunden werden. In dem Saugschlauch 10 befindet sich zu diesem Zeitpunkt regelmäßig noch Luft, die durch das eintretende Prüffluid verdrängt werden muss. Nach Abschluss der Saugprüfung und entsprechendem Abbau des Unterdrucks kann die Ventilstange 36 sich entweder noch in der ersten Schaltstellung befinden oder bereits wieder in die in Figur 2 gezeigte dritte Stellung gelangt sein. Im ersteren Fall wird durch den während der Entlüftung noch relativ geringen Druck im Inneren des Saugschlauchs 10 die Ventilstange 36 zunächst in die in Figur 2 gezeigte dritte Stellung gedrückt, bzw. sie befindet sich ohnehin bereits in dieser dritten Stellung. Die durch die Vorspannfeder 48 bereitgestellte Vorspannung ist ausreichend, um die Ventilstange 36 während des im Zuge des Entlüftens aufgebauten noch relativ geringen Drucks in der dritten Stellung zu halten, so dass die in dem Inneren des Saugschlauchs 10 befindliche Luft über die Durchgangsöffnung 34 in die Umgebung entweichen kann. Mit zunehmendem Eintritt des Prüffluids steigt der Druck im Inneren des Saugschlauchs 10 an bis die Vorspannung der Vorspannfeder 48 überschritten wird und die Ventilstange 36 in die zweite Schaltstellung gedrückt wird, in Figur 2 axial nach oben, bis der zweite Dichtring 46 dicht an dem zweiten Dichtsitz 40 anliegt. Ab diesem Zeitpunkt kann das in das Innere des Saugschlauchs 10 eingeleitete Prüffluid nicht in die Umgebung entweichen. Durch weiteres Einleiten des Prüffluids kann in dem Saugschlauch 10 der vorgegebene Prüfdruck erzeugt werden. Somit ist eine kombinierte Saug- und Druckprüfung ohne manuellen Eingriff am Prüfanschluss und ohne erforderliches Umkuppeln des Saugschlauchs 10 möglich.

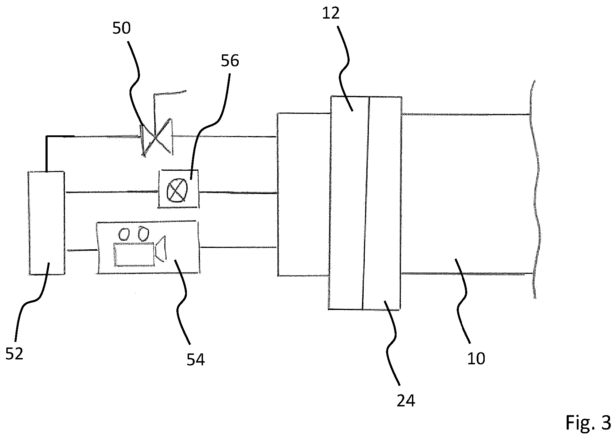

In Figur 3 ist ein weiteres Ausführungsbeispiel eines erfindungsgemäßen Prüfanschlusses gezeigt. Dieser unterscheidet sich von dem in den Figuren 1 und 2 gezeigten Prüfanschluss lediglich darin, dass anstelle des Prüfventils 30 ein steuerbares, vorliegend elektrisch steuerbares, Prüfventil 50 vorgesehen ist. Eine Steuereinrichtung 52 steuert das Prüfventil 50 zwischen der ersten Schaltstellung und der zweiten Schaltstellung und bevorzugt auch in eine dritte Stellung für ein Entlüften des Saugschlauchs 10 vor einer Druckprüfung. Die Steuereinrichtung 52 kann auch die Unterdruckeinrichtung und die Druckeinrichtung zum Durchführen der kombinierten Saug- und Druckprüfung bzw. entsprechende Ventile zum wahlweisen Anschließen der Pumpen an den zweiten Kupplungsabschnitt 26 ansteuern. Bei dem in Figur 3 gezeigten Ausführungsbeispiel ist außerdem eine Kamera 54 vorgesehen, die das Innere des Saugschlauchs 10 aufnimmt und die Kamerabilder zum Beispiel an die Steuereinrichtung 52 und/oder eine Anzeigeeinheit überträgt. Auf diese Weise kann zum Beispiel während einer Saugprüfung das Innere des Saugschlauchs 10 mit der Kamera 54 aufgenommen werden. Die Kamera 54 wird bevorzugt ebenfalls von der Steuereinrichtung 52 angesteuert. Außerdem ist bei dem in Figur 3 gezeigten Ausführungsbeispiel eine Lichtquelle 56, beispielsweise eine LED Lichtquelle 56, vorgesehen, die das Innere des Saugschlauchs 10 beleuchtet. Auf diese Weise kann das Innere des Saugschlauchs 10 zum Beispiel während der Saugprüfung besser überwacht werden. Auch die Lichtquelle 56 kann von der Steuereinrichtung 52 angesteuert werden.

Selbstverständlich ist auch bei dem Ausführungsbeispiel nach Figur 3 ein Sichtfenster 22 möglich, wie dies oben zu den Figuren 1 und 2 dargestellt wurde, insbesondere für eine gegebenenfalls zusätzliche manuelle Sichtprüfung des Inneren des Saugschlauchs 10. In gleicher Weise könnten auch die Kamera 54 und/oder die Lichtquelle 56 bei dem Ausführungsbeispiel nach den Figuren 1 und 2 vorgesehen sein, ebenso wie die Steuereinrichtung 52.

Weiter wird darauf hingewiesen, dass mit Bezug auf die Figuren 1 bis 3 die Beschreibung anhand eines beispielhaften Bauteils 10 in Form eines Saugschlauchs 10 erfolgt ist. Selbstverständlich könnten auch andere zu prüfende Bauteile 10 vorgesehen sein.

**BEZUGSZEICHENLISTE**

| | | | |
|---|---|---|---|
| 10 | Saugschlauch | 50 | Prüfventil |
| 12 | Anschlussabschnitt | 52 | Steuereinrichtung |
| 14 | erste Öffnung | 54 | Kamera |
| 16 | zentrale Bohrung | 56 | Lichtquelle |
| 18 | zylindrischer Abschnitt | | |
| 20 | zylindrischer Ringabschnitt | | |
| 22 | Sichtfenster | | |
| 24 | erster Kupplungsabschnitt | | |
| 26 | zweiter Kupplungsabschnitt | | |
| 28 | zweite Öffnung | | |
| 30 | Prüfventil | | |
| 32 | Ventilgehäuse | | |
| 34 | Durchgangsöffnung | | |
| 36 | Ventilstange | | |
| 38 | erster Ventilsitz | | |
| 40 | zweiter Ventilsitz | | |
| 42 | Flansch | | |
| 44 | erster Dichtabschnitt | | |
| 46 | zweiter Dichtabschnitt | | |
| 48 | Vorspannfeder | | |

## Patentansprüche

1. System umfassend eine Unterdruckeinrichtung zum Erzeugen eines vorgegebenen Unterdrucks in einem zu prüfenden Bauteil (10) und eine Druckeinrichtung zum Erzeugen eines vorgegebenen Prüfdrucks in dem zu prüfenden Bauteil (10) sowie einen Prüfanschluss zum Prüfen des fluidführenden Bauteils (10), insbesondere einer fluidführenden Armatur und/oder eines fluidführenden Schlauchs, wobei ein zu prüfendes Bauteil (10) mit einer Öffnung (14) an den Prüfanschluss anschließbar ist, wobei mittels der Unterdruckeinrichtung ein vorgegebener Unterdruck in dem Bauteil (10) erzeugbar ist, und wobei mittels der Druckeinrichtung ein vorgegebener Prüfdruck in dem Bauteil (10) erzeugbar ist, wobei der Prüfanschluss ein zwischen einer ersten Schaltstellung und einer zweiten Schaltstellung schaltbares Prüfventil (30, 50) aufweist, so dass der Unterdruck mittels der Unterdruckeinrichtung und der Prüfdruck mittels der Druckeinrichtung im an den Prüfanschluss angeschlossenen Zustand des Bauteils (10) nacheinander in dem Bauteil (10) erzeugbar sind.

2. System nach Anspruch 1, **dadurch gekennzeichnet, dass** das Prüfventil (30, 50) in der ersten Schaltstellung den Prüfanschluss gegen einen Eintritt von Luft in das an den Prüfanschluss angeschlossene Bauteil (10) während des Erzeugens des Unterdrucks in dem Bauteil (10) verschließt, und wobei das Prüfventil (30, 50) in der zweiten Schaltstellung den Prüfanschluss gegen einen Austritt eines Prüffluids aus dem an den Prüfanschluss angeschlossenen Bauteil (10) während des Erzeugens des Prüfdrucks in dem Bauteil (10) verschließt.

3. System nach einem der Ansprüche 1 oder 2, **dadurch gekennzeichnet, dass** das Prüfventil (50) mittels einer Steuereinrichtung (52) elektrisch oder hydraulisch oder pneumatisch gesteuert zwischen der ersten Schaltstellung und der zweiten Schaltstellung schaltbar ist.

4. System nach einem der Ansprüche 1 oder 2, **dadurch gekennzeichnet, dass** das Prüfventil (30) mechanisch durch Erzeugen des Unterdrucks und des Prüfdrucks zwischen der ersten Schaltstellung und der zweiten Schaltstellung schaltbar ist.

5. System nach einem der vorhergehenden Ansprüche, **dadurch gekennzeichnet, dass** das Prüfventil (30, 50) ein mit dem Prüfanschluss verbundenes Ventilgehäuse (32) mit einem ersten Ventilsitz (38) und einem zweiten Ventilsitz (40) sowie ein in einer Axialrichtung in dem Ventilgehäuse (32) bewegliches Ventilelement (36) aufweist, dass das Ventilelement (36) in der ersten Schaltstellung des Prüfventils (30, 50) mit einem ersten Dichtabschnitt (44) an dem ersten Ventilsitz (38) anliegt, so dass der erste Dichtabschnitt (44) das Ventilgehäuse (32) gegen einen Eintritt von Luft abdichtet, und dass das Ventilelement (36) in der zweiten Schaltstellung des Prüfventils (30, 50) mit einem zweiten Dichtabschnitt (46) an dem zweiten Ventilsitz (40) anliegt, so dass der zweite Dichtabschnitt (46) das Ventilgehäuse (32) gegen einen Austritt eines Prüffluids abdichtet.

6. System nach Anspruch 5, **dadurch gekennzeichnet, dass** das Ventilelement (36) durch Erzeugen des Unterdrucks und des Prüfdrucks axial zwischen der ersten Schaltstellung und der zweiten Schaltstellung beweglich ist.

7. System nach einem der Ansprüche 5 oder 6, **dadurch gekennzeichnet, dass** das Ventilelement (36) eine in Axialrichtung beweglich gelagerte Ventilstange (36) aufweist, an der der erste und zweite Dichtabschnitt (44, 46) angeordnet sind.

8. System nach einem der Ansprüche 5 bis 7, **dadurch gekennzeichnet, dass** der erste und zweite Dichtabschnitt (44, 46) durch einen ersten und zweiten Dichtring (44, 46), vorzugsweise einen ersten und zweiten Gummiring (44, 46), oder durch eine erste und zweite Dichtplatte, vorzugsweise eine erste und zweite Gummiplatte, gebildet sind.

9. System nach einem der Ansprüche 5 bis 8, **dadurch gekennzeichnet, dass** das Ventilelement (36) durch ein Vorspannelement (48), vorzugsweise eine Vorspannfeder (48), in eine zwischen der ersten und zweiten Schaltstellung befindliche dritte Stellung vorgespannt ist, in der ein Durchtritt von Luft oder Prüffluid durch das Ventilgehäuse (32) möglich ist.

10. System nach Anspruch 9, **dadurch gekennzeichnet, dass** die Vorspannung derart ausgebildet ist, dass das Ventilelement (36) während eines Entlüftens eines an den Prüfanschluss angeschlossenen Bauteils (10) durch Erzeugen eines Entlüftungsdrucks in dem Bauteil (10), der geringer als der Prüfdruck ist, durch die Vorspannung des Vorspannelements (48) in der dritten Stellung gehalten wird und durch Erzeugen des höheren Prüfdrucks gegen die Vorspannung des Vorspannelements (48) in die zweite Schaltstellung bewegt wird.

11. System nach einem der vorhergehenden Ansprüche, **dadurch gekennzeichnet, dass** er weiterhin ein Sichtfenster (22) für eine Sichtprüfung des Inneren eines an den Prüfanschluss angeschlossenen Bauteils (10) aufweist.

12. System nach einem der vorhergehenden Ansprüche, **dadurch gekennzeichnet, dass** er weiterhin eine das Innere eines an den Prüfanschluss angeschlossenen Bauteils (10) aufnehmende Kamera (54) aufweist.

13. System nach einem der vorhergehenden Ansprüche, **dadurch gekennzeichnet, dass** er weiterhin eine das Innere eines an den Prüfanschluss angeschlossenen Bauteils (10) beleuchtende Lichtquelle (56) aufweist.

14. Verwendung eines Systems nach einem der vorhergehenden Ansprüche zur kombinierten Saug- und Druckprüfung des an den Prüfanschluss angeschlossenen zu prüfenden Bauteils (10), insbesondere eines Saugschlauchs (10), wobei im an den Prüfanschluss angeschlossenen Zustand des Bauteils (10) in dem Bauteil (10) nacheinander für eine Saugprüfung ein Unterdruck mittels der Unterdruckeinrichtung und für eine Druckprüfung ein Prüfdruck mittels der Druckeinrichtung erzeugt werden.

## Claims

1. A system comprising a negative-pressure apparatus for generating a specified negative pressure in a component (10) to be tested and a pressure apparatus for generating a specified test pressure in the component (10) to be tested as well as a test connection for testing the fluid-conducting component (10), in particular a fluid-conducting fitting and/or a fluid-conducting hose, wherein a component (10) to be tested can be connected to the test connection by an opening (14), wherein a specified negative pressure can be generated in the component (10) by means of the negative-pressure apparatus, and wherein a specified test pressure can be generated in the component (10) by means of the pressure apparatus, wherein the test connection has a test valve (30, 50) that can be switched between a first switching position and a second switching position, such that the negative pressure can be generated by means of the negative-pressure apparatus and the test pressure can be generated by means of the pressure apparatus one after the other in the component (10) in the state of the component (10) connected to the test connection.

2. The system according to claim 1, **characterized in that** the test valve (30, 50), in the first switching position, closes the test connection against an ingress of air into the component (10) connected to the test connection when the negative pressure is generated in the component (10), and wherein the test valve (30, 50), in the second switching position, closes the test connection against an egress of a test fluid from the component (10) connected to the test connection when the test pressure is generated in the component (10).

3. The system according to any one of claims 1 or 2, **characterized in that** the test valve (50) can be switched between the first switching position and the second switching position in an electrically or hydraulically or pneumatically controlled manner.

4. The system according to any one of claims 1 or 2, **characterized in that** the test valve (30) can be mechanically switched between the first switching position and the second switching position by generating the negative pressure and the test pressure.

5. The system according to any one of the preceding claims, **characterized in that** the test valve (30, 50) has a valve housing (32) connected to the test connection and comprising a first valve seat (38) and a second valve seat (40), and has a valve element (36) that can be moved in an axial direction in the valve housing (32), **in that** the valve element (36) rests against the first valve seat (38) by a first sealing portion (44) in the first switching position of the test valve (30, 50), such that the first sealing portion (44) seals the valve housing (32) against an ingress of air, and **in that** the valve element (36) rests against the second valve seat (40) by a second sealing portion (46) in the second switching position of the test valve (30, 50), such that the second sealing portion (46) seals the valve housing (32) against an egress of a test fluid.

6. The system according to claim 5, **characterized in that** the valve element (36) can be moved axially between the first switching position and the second switching position by generating the negative pressure and the test pressure.

7. The system according to any one of claims 5 or 6, **characterized in that** the valve element (36) has a valve rod (36) which is mounted so as to be movable in the axial direction and on which the first and second sealing portion (44, 46) are arranged.

8. The system according to any one of claims 5 to 7, **characterized in that** the first and second sealing portion (44, 46) are formed by a first and second sealing ring (44, 46), preferably a first and second rubber ring (44, 46), or by a first and second sealing plate, preferably a first and second rubber plate.

9. The system according to any one of claims 5 to 8, **characterized in that** the valve element (36) is biased into a third position located between the first and second switching position by means of a biasing element (48), preferably a biasing spring (48), in which third position a passage of air or test fluid through the valve housing (32) is possible.

10. The system according to claim 9, **characterized in that** the biasing is designed such that the valve element (36) is held in the third position by means of the biasing of the biasing element (48) when a component (10) connected to the test connection is vented by generating a venting pressure in the component (10) that is less than the test pressure, and is moved into the second switching position by generating the higher test pressure against the biasing of the biasing element (48).

11. The system according to any one of the preceding claims, **characterized in that** it further has a viewing window (22) for a visual inspection of the interior of a component (10) connected to the test connection.

12. The system according to any one of the preceding claims, **characterized in that** it further has a camera (54) that records the interior of a component (10) connected to the test connection.

13. The system according to any one of the preceding claims, **characterized in that** it further has a light source (56) that illuminates the interior of a component (10) connected to the test connection.

14. A use of a system according to any one of the preceding claims for combined suction and pressure testing of the component (10), in particular a suction hose (10), to be tested that is connected to the test connection, wherein a negative pressure is generated by means of the negative-pressure apparatus for a suction test and a test pressure is generated by means of the pressure apparatus for a pressure test one after the other in the component (10) in the state of the component (10) connected to the test connection.

## Revendications

1. Système comportant un dispositif de dépression pour la production d'une dépression prédéfinie dans un composant à contrôler (10) et un dispositif de pression pour la production d'une pression de contrôle prédéfinie dans le composant à contrôler (10) ainsi qu'un raccord de contrôle pour le contrôle du composant conduisant un fluide (10), en particulier d'une armature conduisant un fluide et/ou d'un tuyau conduisant un fluide,
dans lequel un composant à contrôler (10) peut être raccordé au raccord de contrôle avec une ouverture (14), dans lequel une dépression prédéfinie peut être produite dans le composant (10) au moyen du dispositif de dépression, et dans lequel une pression de contrôle prédéfinie peut être produite dans le composant (10) au moyen du dispositif de pression, dans lequel le raccord de contrôle présente une soupape de contrôle (30, 50) commutable entre une première position de commutation et une deuxième position de commutation, de sorte que la dépression peut être produite au moyen du dispositif de dépression et la pression de contrôle peut être produite au moyen du dispositif de pression successivement dans le composant (10) dans l'état du composant (10) raccordé au raccord de contrôle.

2. Système selon la revendication 1, **caractérisé en ce que** dans la première position de commutation, la soupape de contrôle (30, 50) ferme le raccord de contrôle contre une entrée d'air dans le composant (10) raccordé au raccord de contrôle pendant la production de la dépression dans le composant (10), et dans lequel, dans la deuxième position de commutation, la soupape de contrôle (30, 50) ferme le raccord de contrôle contre une sortie d'un fluide de contrôle hors du composant (10) raccordé au raccord de contrôle pendant la production de la pression de contrôle dans le composant (10).

3. Système selon la revendication 1 ou 2, **caractérisé en ce que** la soupape de contrôle (50) peut être commutée entre la première position de commutation et la deuxième position de commutation en étant commandée de façon électrique ou hydraulique ou pneumatique au moyen d'un dispositif de commande (52).

4. Système selon l'une des revendications 1 ou 2, **caractérisé en ce que** la soupape de contrôle (30) peut être commutée entre la première position de commutation et la deuxième position de commutation de façon mécanique par production de la dépression et de la pression de contrôle.

5. Système selon l'une des revendications précédentes, **caractérisé en ce que** la soupape de contrôle (30, 50) présente un boîtier de soupape (32) relié au raccord de contrôle, avec un premier siège de soupape (38) et un deuxième siège de soupape (40) ainsi qu'un élément de soupape (36) déplaçable dans une direction axiale dans le boîtier de soupape (32), **en ce que** l'élément de soupape (36) s'applique avec une première section d'étanchéité (44) sur le premier siège de soupape (38) dans la première position de commutation de la soupape de contrôle (30, 50), de telle façon que la première section d'étanchéité (44) assure l'étanchéité du boîtier de soupape (32) contre une entrée d'air, et **en ce que** l'élément de soupape (36) s'applique avec une deuxième section d'étanchéité (46) sur le deuxième siège de soupape (40) dans la deuxième position de commutation de la soupape de contrôle (30, 50), de telle façon que la deuxième section d'étanchéité (46) assure l'étanchéité du boîtier de soupape (32) contre une sortie d'un fluide de contrôle.

6. Système selon la revendication 5, **caractérisé en ce que** l'élément de soupape (36) est déplaçable axialement entre la première position de commutation et la deuxième position de commutation par production de la dépression et de la pression de contrôle.

7. Système selon l'une des revendications 5 ou 6, **caractérisé en ce que** l'élément de soupape (36) présente une tige de soupape (36) montée de façon déplaçable dans la direction axiale, sur laquelle sont disposées la première et la deuxième section d'étanchéité (44, 46).

8. Système selon l'une des revendications 5 à 7, **caractérisé en ce que** la première et la deuxième section d'étanchéité (44, 46) sont formées par une première et une deuxième bague d'étanchéité (44, 46), de préférence une première et une deuxième bague en caoutchouc (44, 46), ou par une première et une deuxième plaque d'étanchéité, de préférence une première et une deuxième plaque en caoutchouc.

9. Système selon l'une des revendications 5 à 8, **caractérisé en ce que** l'élément de soupape (36) est précontraint par un élément de précontrainte (48), de préférence un ressort de précontrainte (48), dans une troisième position située entre la première et la deuxième position de commutation, dans laquelle un passage d'air ou de fluide de contrôle à travers le boîtier de soupape (32) est possible.

10. Système selon la revendication 9, **caractérisé en ce que** la précontrainte est réalisée de telle façon que l'élément de soupape (36) est maintenu dans la troisième position par précontrainte de l'élément de précontrainte (48) pendant une aération d'un composant (10) raccordé au raccord de contrôle par production d'une pression d'aération dans le composant (10), laquelle est inférieure à la pression de contrôle, et déplacé vers la deuxième position de commutation contre la précontrainte de l'élément de précontrainte (48) par production de la pression de contrôle plus élevée.

11. Système selon l'une des revendications précédentes, **caractérisé en ce que** celui-ci présente en outre une fenêtre de vision (22) pour un contrôle visuel de l'intérieur d'un composant (10) raccordé au raccord de contrôle.

12. Système selon l'une des revendications précédentes, **caractérisé en ce que** celui-ci présente en outre une caméra (54) enregistrant l'intérieur d'un composant (10) raccordé au raccord de contrôle.

13. Système selon l'une des revendications précédentes, **caractérisé en ce que** celui-ci présente en outre une source de lumière (56) éclairant l'intérieur d'un composant (10) raccordé au raccord de contrôle.

14. Utilisation d'un système selon l'une des revendications précédentes, pour la combinaison d'un contrôle d'aspiration et de pression du composant (10) à contrôler, en particulier d'un tuyau d'aspiration (10), lequel est raccordé au raccord de contrôle, dans laquelle, dans l'état du composant (10) raccordé au raccord de contrôle, une dépression peut être produite au moyen du dispositif de dépression pour un contrôle d'aspiration et une pression de contrôle peut être produite au moyen du dispositif de pression pour un contrôle de pression successivement dans le composant (10).
